# EUROPEAN PATENT SPECIFICATION

(11) **EP 0 326 032 B1**
(45) Date of publication and mention of the grant of the patent: **03.11.1993**
(21) Application number: 89100982.1
(22) Date of filing: 20.01.1989
(51) Int. Cl.: B29C 41/14, B29D 22/00

(54) **Polymeric casing with textured surface**
Kunststoff-Umhüllung mit texturierter Oberfläche
Gaine polymère avec surface structurée

(30) Priority: 27.01.1988 US 148788; 20.10.1988 US 260157
(43) Date of publication of application: 02.08.1989
(73) Proprietor: LRC PRODUCTS LIMITED, London, E4 8QA (GB)
(72) Inventor: McGlothlin, Mark W., San Diego California 92129 (US); DePaul, Alice A., San Diego California 92129 (US)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- WO-A-81/00346
- CH-A- 431 956
- FR-A- 1 373 717
- GB-A- 1 027 886
- GB-A- 1 054 206
- GB-A- 1 340 065
- US-A- 4 119 094

## Description

This invention relates to a method for the manufacture of a polymeric casing of preselected shape having a lubricous surface according to the preamble of claim 1. Specifically the invention relates to a method for the manufacture of a polymeric casing used for prophylactic and clinical purposes.

The casings addressed by the present invention assume a variety of forms. Prophylactic sheaths are one type of example of such casings. Such sheaths are widely used as covering and protective devices for clinical use as well as personal use. The most common forms of such sheaths are surgical gloves, finger cots and condoms. Another example is an inflatable bladder affixed to the end of a medical catheter for retention of the catheter within a body channel or to distend or maintain an opening to an internal cavity.

The smooth survaces of the polymeric materials of which these casings are made are highly friction-bearing and tend to stick together. This presents numerous problems. In condoms, finger cots and gloves, for instance, these nonlubricous surfaces make it difficult both to remove the products from their packaging and to position them fully and evenly in place for use without wrinkling or running the risk of tearing the sheath material. In surgical gloves, sticking surfaces further interfere with the user's finger mobility, rendering them awkward and potentially dangerous when used in highly sensitive procedures. An inflatable bladder with a nonlubricous surface requires an externally applied lubricant before it can be inserted into the body channel.

The powders or lubricants commonly used for such casings are not suitable in many situations. Surgical use in many cases precludes the use of powders and lubricants, and allergic reactions may also occur. Uniformity of the application of the lubricant over the casing surface is also a concern in some cases, as is the stability of the lubricant and the difficulty of applying it.

GB-A-1 027 886 discloses a process for the production of thin walled shaped articles of elastomeric material. According to this process a solution or dispersion of an elastomeric material in a liquid medium is made, the solution or dispersion is formed into a shaped article, the shaped article is contacted with an extractor liquid in which said liquid medium is soluble and the elastomer is insoluble to extract said liquid medium from the liquid shaped article and to convert the liquid shaped article into a coherent solid shaped article. Subsequently the coherent solid article is air cured at temperatures up to 160°C. This process is described to avoid time consuming drying steps for removing the liquid medium and to prevent the formation of pin holes and bubbles during the curing step.

A novel method is provided herein for rendering the surface of a polymeric casing lubricous during formation of the casing itself, without the addition of any lubricating substance, be it powdered or liquid. The surface is a matte finish surface which is applied to casings which are produced by dipping a form or mold in a liquid from which the polymer is made. The liquid is a solution of a fully formed polymer which forms the casing directly upon the evaporation of the solvent. The form or mold is wettably by the solution which leaves a liquid film over the surface of the form as the form is withdrawn from the solution. The matte finish is formed on the film as it dries to form the casing, and the surface thus affected is the surface facing outward. The matte finish imparts the lubricous character to the casing surface.

In accordance with the present invention, the matte finish is formed by applying a second liquid over the surface of the wet film before the film has fully solidified. The second liquid is one which is miscible with the solvent in the solution forming the underlying film, and yet one in which the polymer is substantially insoluble. The polymer is then permitted to form into a solid film, and as this is occurring, the interaction of the polymer with the solvent and the nondissolving liquid sufficiently affects the surface of the polymer film being formed to create the matte finish, which overcomes the normal self-sticking character of the polymer and provides a lubricous effect. The casing may be removed from the form after all liquids have been evaporated or otherwise removed, or after most of the liquid has been removed leaving but a small amount of residual liquid on the sheath surface.

For maximum lubricous effect on sheaths such as condoms, finger cots and surgical gloves, the matte finish on the outer surface of the sheath is combined with a textured finish on the inner surface. Although similar in appearance to the outer matter finish, the inner textured finish is imposed on the sheath material by the surface of the form, which is roughened by any of a variety of techniques known to those skilled in the art.

As stated above, the polymeric casings are prepared by dipping a form or mold bearing the contours of the desired shape of the final product into the liquid from which the polymer is formed, withdrawing the form from the liquid to leave a thin liquid film over the exterior of the form, and then converting the film to a solid, leaving the form encased in the resulting solid, substantially dry sheath, which is then pulled or rolled off. In accordance with the invention, the second liquid is applied to the film either before or during its solidification.

The second liquid, as stated above, is one which is miscible with the solvent in the underlying film, and yet does not dissolve the polymer. The choice of this liquid is otherwise not critical, and the optimum choice in any particular case will depend on the choice of polymer and of the solvent in which the polymer is dissolved. Organic liquids such as hexane, for example, are suitable in some systems. In general, however, water is the most preferred liquid in systems where water meets the above criteria.

Application of the second liquid may be achieved in a variety of ways. The liquid may be applied, for example, as droplets over the film surface. Droplets may be formed, for example, by condensing the liquid onto the film from the surrounding atmosphere. Alternatively, the droplets can be applied by the direct spraying of a fine mist over the film surface. Best results are obtained when extremely fine droplets are applied.

In systems using water as the second liquid, condensation from the surrounding atmosphere may be achieved using an atmosphere containing sufficient moisture to permit this to occur. The condensation may be induced by lowering the temperature of the atmosphere by external means below the dew point, or in a preferred manner, by lowering the temperature of the film itself. Most preferably, the latter effect may be achieved by the cooling effect of the evaporation of the solvent when one is present. When such evaporative cooling is used to achieve the condensation, the rate and degree of condensation will depend on various system parameters, including the relative humidity of the atmosphere, the latent heat of vaporisation of the solvent, and the thermal characteristics of the form which supports the film. Further considerations include the amount of solvent present in the solution, the volatility of the solvent, and the rate at which the form is withdrawn from the solution.

Forms most suitable for use when condensation is to be achieved by evaporative cooling are those which have high heat transfer characteristics. Specifically, those which retain a minimum amount of heat as the film cools during evaporation of the solvent (i.e., those which cool rapidly with the cooling film) are preferred. Forms of this type will permit the evaporative cooling to have its maximum effect in lowering the temperature of the polymer film. Forms may be constructed of metal, such as for example aluminum, stainless steel or copper; polymeric materials, such as for example polyethylene, polypropylene or polytetrafluoroethylene (Teflon); ceramics such as glass or porcelain; and composite materials such as Teflon-coated or glass-coated metals. For high heat transfer characteristics, a low mass form, and particularly a thin-walled hollow form is preferred. Hollow forms made from materials having high thermoconductivities are preferred. Thermoconductivities of at least about 83,71 × 10⁻⁴ J/(sec·cm·°C) (20 × 10⁻⁴(cal/sec·cm·°C)) are particularly preferred. Thin-walled hollow glass forms for example have particularly effective heat transfer characteristics. Hollow glass forms with wall thicknesses of less than 0.635 cm (0.25 inch) are preferred, with less than 0.381 cm (0.15 inch) particularly preferred. Thin-walled hollow plastic forms (using the polymeric materials listed above) are also preferred, notably those having wall thicknesses of less than 0.318 cm (0.125 inch), with those having wall thickness less than 0.102 cm (0.040 inch) particularly preferred.

For condensation to occur on the wet film upon withdrawal of the form from the polymer solution, the atmosphere above the solution will contain water vapor. The relative humidity needed to achieve the condensation effect will depend on how condensation is achieved-i.e., either by an externally induced temperature drop or by evaporative cooling of the film itself. Variations in the ambient temperature and relative humidity will also affect the rate and amount of condensation. In most applications where evaporative cooling is used, best results are achieved with an atmosphere having a relative humidity of at least about 50%, preferably from about 70% to about 95%. The ambient temperature is not critical. In most cases, however, best results will be obtained within a range of from about 10°C to about 30°C, preferably from about 15°C to about 25°C. Circulation of the air in the atmosphere at a mild rate will enhance the uniformity of condensation over the film surface.

The formation of the film and the character of the resulting casing will be determined in part by the rate of withdrawal of the form from the polymer solution. Continuous withdrawal at a steady rate is preferred for maximum uniformity in the final product.

The rate of withdrawal will be selected with certain considerations in mind. For example, the thickness of the ultimate film will vary with the rate of withdrawal, a faster withdrawal rate producing a thicker film. (The film thickness will further be affected by other system parameters, such as the concentration of polymer in the solution, as discussed below.) The withdrawal rate should be slow enough, however, to permit the evaporation of a major amount of the solvent within a short distance from the liquid surface, i.e., sufficient solvent evaporation to convert the film to a thixotropic form (i.e., immobilized on the surface of the form although possibly still tacky due to a small amount of solvent remaining). This minimizes solution runoff and promotes uniformity of the film in terms of thickness and polymer distribution.

In addition to these considerations, one will also consider the nature of the casing being formed when determining a withdrawal rate. Thus, the thickness will vary depending on whether the casing is to be a sheath such as a glove, a condom, or some other type of prophylactic, or an inflatable bladder. In most applications, best results are achieved with withdrawal rates which result in the film achieving a thixotropic state by the time it reaches a distance of about two inches from the solution surface. Preferred withdrawal rates are those by which the film reaches a thixotropic state within about one inch from the solution surface. In most applications best results will be obtained using withdrawal rates of about 0.254 cm (0.1 inch) per second or less. In the case of simple forms such as those used for condom manufacture, a withdrawal rate of about 0.152 cm (0.06 inch) per second has been found to be particularly effective.

Minimum thickness is preferred in all cases, provided that adequate strength is retained to eliminate tearing and pinhole formation during manufacture or use. In the case of polyurethane films, very thin films permit high rates of moisture vapor transmission (breathability), i.e., the passage of water vapor through the finished film to the atmosphere when there is a humidity gradient across the film. This is a feature which is particularly useful in surgical gloves since it minimizes the discomfort of perspiration. The moisture vapor transmission rate varies inversely with the film thickness, the correlation having a particularly high slope at film thicknesses below about 5 mils.

The immersion of the form into the polymer solution is of less concern, having less of an effect on the final product. The major consideration during immersion is to avoid the entrapment of bubbles on the tip of the form, or depending on the shape of the form, at any portion of the surface where the contour would inhibit smooth flow. In most applications, immersion rates of 1.27 cm (0.5 inches) per second or less will provide the best results. For simple forms such as mandrels used in condom manufacture, an immersion rate of approximately 1.016 cm (0.4 inch) per second has been found to be effective.

In further embodiments of the invention, as mentioned above, the droplets may be applied to the polymer film emerging from the solution by the spraying of a fine water mist on the film. This eliminates the considerations of temperature, humidity, and heat transfer characteristics of the form, as well as other considerations necessary to achieve condensation. Any conventional means of atomizing water and applying the resulting mist or spray uniformly over the film may be used. The use of an ultrasonic humidifier is one example of a means of achieving this result.

The present invention extends to a wide range of polymers used as the sheath materials. This includes the wide range of known polymeric materials, particularly thermoplastic elastomers. Examples include natural and synthetic rubber latices, polymer plastisols, polyurethanes, and regenerated collagens, as well as copolymers, interpolymers, and block copolymers of these and other materials. Examples of rubber latices, for instance, are polybutadiene, polyisoprene, polychloroprene, polynitriles, polyacrylates, silicones, and various fluoroelastomers.

The use of block copolymers, for instance, is an effective way of controlling the characteristics of the finished polymer. This is achieved by judicious selection of the hard and soft segments which comprise the copolymer. As is known among those skilled in the art, the soft segment is generally a long chain flexible component having a glass transition temperature below room temperature, and the hard segment is generally a shorter stiffer component having a glass transition temperature above room temperature and tending toward physical cross linking with like segments. One selects hard and soft segments of appropriate structure as well as the proportions and arrangements in which they are combined in order to provide a resulting block copolymer with the desired properties. The selection of the particular segments as well as their proportions and arrangements in the block copolymer are within the knowledge of those skilled in the copolymer art.

One example of a block copolymer useful in the present invention is a product designated T722-A, available from E. I. du Pont de Nemours & Co., Inc., Wilmington, Delaware, identified by the manufacturer as a polyether copolymer with polyether soft segment. The sheath may be formed by dipping the form in a solution of the copolymer in a volatile solvent, followed by withdrawal of the form to leave a film of the solution on the form surface, then evaporating the solvent from the film. A range of solvents may be used. A preferred solvent is meta-cresol.

Polyurethanes are also of interest, particularly those which are soluble in a volatile solvent at high concentrations, and those from which the solvent will evaporate to leave a finished product without the need for further curing. Thermoplastic, primarily linear polyurethanes are preferred. Examples include both polyether-based and polyester-based polyurethanes, as well as those based on a combination of both. Examples further include polyurethanes in the form of block copolymers, and polyurethanes containing chain extenders and modifiers.

The polyurethanes may be formed from a wide range of polyisocyanates and polyols. Examples of polyisocyanates are aromatic and alicyclic diisocyanates such as 4,4'-diphenyl methane diisocyanate (MDI), toluene diisocyanate (TDI), isophorone diisocyanate (IPDI), methylene bis-(4-cyclohexyl) diisocyanate (HMDI), and 1,4-diisocyanatobenzene (PPDI). Examples of polyester diols are polylactones such as polycaprolactone polyol, and copolymers of short chain diols and aliphatic dicarboxylic acids such as poly(ethylene adipate) polyol, poly(ethylene succinate) polyol, poly(ethylene sebacate) polyol, poly(butylene adipate) polyol, and poly(diethylene ether adipate) polyol. An example of a polyether polyol is poly(tetramethylene ether) glycol. All such materials are well known among those skilled in the art, and either commercially available or capable of preparation by conventional methods. Many such materials and the polymers formed from them are commercially available.

Preferred polyurethanes will be those which combine high strength with a high degree of softness. The strength, expressed in terms of tensile strength, will be at least about 344.7 bar (5,000 psi), preferably from about 344.7 bar to about 689.4 bar (5,000 to about 10,000 psi), and most preferably from about 482.6 bar to about 620.5 bar (7,000 to about 9,000 psi). The softness, expressed as Shore A hardness, preferably ranges from about 60 to about 80. Likewise, the 100% tensile modulus will be at least about 13.8 bar (200 psi), preferably from about 13.8 bar to about 41.4 bar (200 psi to about 600 psi). The strength to hardness ratio, expressed in terms of the units given above in brackets, will generally range from about 50 to about 200, preferably from about 80 to about 125.

With these properties, the thickness of the sheath is selected to produce the desired tensile strength and 100% tensile modulus. The thickness in the case of polyurethane condoms is generally less than 0.0036 cm (0.0014 inch), and preferably ranges from about 0.0010 cm (0.0004 inch) to about 0.0036 cm (0.0014 inch), most preferably from about 0.0015 cm (0.0006 inch) to about 0.0023 cm (0.0009 inch). For polyurethane surgical gloves, preferred thicknesses are in the range of about 0.0025 cm (0.001 inch) to about 0.0051 cm (0.002 inch).

Preferred solvents for the polymer will generally be nonaqueous solvents. A wide range of solvents may be used, provided that they are inert with respect to the particular polyurethane used, stable throughout the conditions encountered during formation of the sheath, and preferably volatile and capable of dissolving the polyurethane in high concentrations. Examples are aliphatic hydrocarbons, such as for example n-pentane, n-hexane, and isohexane; alicyclic hydrocarbons, such as for example cyclopentane and cyclohexane; aromatic hydrocarbons, such as for example benzene and toluene; halogenated hydrocarbons, such as for example methylene dichloride, 1,2-dichloroethane, 1,1,1-trichloroethane, and 1,1,2-trichloroethane; esters, such as for example ethyl acetate; ethers, such as for example diethyl ether, ethyl n-propyl ether, and ethyl isopropyl ether; ketones, such as for example acetone and methyl ethyl ketone; and heterocyclic compounds, such as for example furan, tetrahydrofuran, and alkyl- and halo-substituted analogs of these.

A particularly preferred solvent is tetrahydrofuran. Mixtures of solvents may also be used, such as for example tetrahydrofuran combined with one or more of the following-methyl ethyl ketone, methylene chloride, and acetone. Preferred solvents are those having boiling points less than about 80°C, those boiling at less than about 75°C particularly preferred.

As mentioned above, the concentration of the polymer in the solution will affect the procedure as well as the properties of the final product, by affecting the viscosity of the solution, the rate of evaporation, and the degree of interaction between the water and the polymer as the matte finish is being formed on the surface of the film. In most cases, best results will be obtained with solutions containing the polymer at a concentration of about 5% to about 30% by weight, preferably about 15% to about 25% by weight.

Once the second liquid has been applied, preferably in the form of water droplets, the film is thoroughly dried to form the final product, a solid dry casing, by evaporating all liquids. This may conveniently be achieved by air drying the film, and in most cases under the same temperature conditions used for the immersion and withdrawal steps. The form may thus simply be left suspended in the atmosphere above the dipping solution until all water and solvent have evaporated off. During or after this time, an end ring may be placed over the film along the border (at the dip line), to facilitate removal of the casing from the form, and also to serve as a retaining ring for the finished product during use. Removal of the finished casing from the form is then achieved in the conventional manner, notably by rolling the casing from the border downward and off of the form.

The matte finish resulting from the treatment will be retained on the surface of the final product. The matte finish will provide a translucent appearance to an otherwise transparent sheath, and will provide a lubricous surface, essentially eliminating the tendency of the surface to stick against itself when rolled or folded over, without the need for fluid or powdered lubricant.

As mentioned above, the present invention extends to casings of a variety of forms. Examples include prophylactic sheaths such as condoms, surgical gloves and finger cots. Further examples are inflatable bladders or balloons. Further features having specific advantages for particular types of sheaths may be incorporated in the procedures described above. In the case of condoms and finger cots, for instance, reinforced borders in the form of rings or bands may be added to promote the retention of the sheath while in use, and to facilitate rolling of the edge of the sheath during application to the body member. The rings or bands may be of material which is the same as or different than that used in the sheath itself. In the case of gloves, it is sometimes desirable to vary the thickness of the material among different sections of the glove surface. This may be achieved by using multiple dips of the glove form in the dipping solution, varying the depth of the dip or the height of withdrawal in between dips. Such a technique can be used, for example, to provide gloves with relatively thick cuffs and relatively thin finger portions.

In the case of prophylactic sheaths, it is often desirable to form a lubricous surface on both sides of the sheath. This may be achieved within the scope of the present invention, by using a sheath form which has a textured surface, such as a glass form with a surface which has been roughened by particle blasting, abrasion, chemical etching or other suitable means. The optimum degree of roughness will vary with the nature of the sheath and its intended use. In most cases, a roughness of about 1.52 µm (60 microinches) or less, preferably from about 0.51 µm (20 microinches) to about 1.52 µm (60 microinches), will provide a sufficiently lubricous effect without significantly compromising the sheath integrity and its transmission characteristics.

The following example is offered for illustrative purposes, and is intended neither to define nor limit the invention in any manner.

### EXAMPLE

A solution of a polyester polyurethane in tetrahydrofuran was prepared, using a polyurethane designated PS 49-100, supplied by K.J. Quinn & Co., Inc., Malden, Massachusetts. The polyurethane is characterized by a Shore A hardness of 70-75, a tensile strength of 551.5 bar (8,000 psi), a 100% modulus of elongation of 37.9 bar (550 psi), a 300% modulus of elongation of 113.8 bar (1650 psi), an elongation of 560% and a tear strength of 27.6 bar (400 psi). The solution was prepared using 17 parts by weight of the polymer and 83 parts by weight of the solvent. A hollow glass condom mandrel having a wall thickness of 0.318 cm (0.125 inch) was dipped in the solution to an 20.3 cm (8 inch) length at an immersion rate of 1.02 cm (0.4 inch) per second, then withdrawn at a steady withdrawal rate of 0.15 cm (0.06 inch) per second, into an atmosphere of air at room temperature (approximately 21°C) having a relative humidity of 60%. A mist formed on the film surface as the mandrel was withdrawn from the dipping solution, and the mandrel was held suspended above the solution for one minute after withdrawal. After a 20-minute drying period, the resulting condom was then removed from the mandrel, and appeared fully dry and solidified, with a translucent appearance indicating a matte finish on the outer surface. A uniform film with a thickness of 0.002 ± 0.00025 cm (0.0008 ± 0.0001 inch) was produced.

The experiment was repeated under identical conditions except for the humidity of the atmosphere, which was reduced to 40%. No condensation was observed on the film surface as the mandrel was withdrawn from the dipping solution, and the finished condom was transparent rather than translucent, indicating a smooth outer surface rather than a matte finish.

## Claims

1. A method for the manufacture of a polymeric casing of preselected shape having a lubricous surface wherein
a) a form of said preselected shape is immersed in a solution of a solid-polymer-forming material dissolved in a first liquid;
b) said form is withdrawn from said solution to retain a liquid film thereof on said form;
c) said film is contacted with a second liquid which is miscible with said first liquid and in which said solid-polymer-forming material is substantially insoluble;
d) said solid-polymer-forming material is converted to a solid polymer film over said form with a matte surface; and
e) said solid polymer film is removed from said form,
characterized in that said solid-polymer-forming material is a fully cured polymer.

2. A method in accordance with claim 1 in which
in step a) a fully cured polyurethane is immersed in a water-miscible solvent having a boiling point less than about 80°C;
in step b) evaporation of said water-miscible solvent from said liquid film is caused;
in step c) said liquid film is contacted with water prior to complete evaporation of said water-miscible solvent thereform; and
in step d) substantially all remaining solvent is evaporated from said liquid film.

3. A method in accordance with claim 2 in which step (b) comprises withdrawing said form into an atmosphere having a relative humidity of from about 50% to about 75%, and step (c) comprises condensing water from said atmosphere onto said film prior to complete evaporation of solvent therefrom.

4. A method in accordance with claim 3 in which steps (b) and (c) are performed at a temperature of from about 15°C to about 25°C.

5. A method in accordance with claim 2 in which said form is hollow, has wall thickness of less than 0.635 cm (0.25 inch), and has a thermal conductivity of at least about 83.71 x 10⁻⁴ J/(sec·cm·°C) (20 x 10⁻⁴ cal/(sec·cm·°C)).

6. A method in accordance with claim 2 in which said form is made of glass, is hollow, and has a wall thickness of less than about 0.381 cm (0.15 inch).

7. A method in accordance with claim 2 in which said form is made of plastic, is hollow, and has a wall thickness of less than about 0.102 cm (0.040 inch).

8. A method in accordance with claim 2 in which step (c) comprises spraying water droplets over said surface.

9. A method in accordance with claim 2 in which said solvent is a member selected from the group consisting of tetrahydrofuran, methyl ethyl ketone, methylene chloride, acetone, and mixtures thereof.

## Patentansprüche

1. Verfahren zur Herstellung einer Kunststoff-Umhüllung mit vorgewählter Gestalt, welche eine gleitfähige Oberfläche besitzt, worin:
a) eine Form mit dieser vorgewählten Gestalt in eine Lösung eines festes Polymeres bildenden Materials, das in einer ersten Flüssigkeit aufgelöst ist, eingetaucht wird;
b) diese Form aus dieser Lösung unter Beibehaltung eines flüssigen Filmes hiervon auf dieser Form herausgezogen wird;
c) dieser Film mit einer zweiten Flüssigkeit, die mit dieser ersten Flüssigkeit mischbar ist und in der dieses festes Polymeres bildende Material unlöslich ist, in Kontakt gebracht wird;
d) dieses festes Polymeres bildende Material zu einem Film von festem Polymerem über dieser Form mit einer matten Oberfläche umgewandelt wird; und
e) dieser Film aus festem Polymerem von dieser Form entfernt wird,
dadurch gekennzeichnet, daß dieses festes Polymeres bildende Material ein vollständig ausgehärtetes Polymeres ist.

2. Verfahren nach Anspruch 1, in welchem
in Stufe a) ein vollständig ausgehärtetes Polyurethan in ein wassermischbares Lösungsmittel, das einen Siedepunkt von weniger als etwa 80° C besitzt, eingetaucht wird;
in Stufe b) Verdampfung dieses wassermischbaren Lösungsmittels aus diesem flüssigen Film herbeigeführt wird;
in Stufe c) dieser flüssige Film mit Wasser vor der vollständigen Verdampfung dieses wassermischbaren Lösungsmittels hieraus in Kontakt gebracht wird; und
in Stufe d) praktisch das gesamte zurückgebliebene Lösungsmittel aus diesem flüssigen Film verdampft wird.

3. Verfahren nach Anspruch 2, in welchem Stufe (b) das Herausziehen dieser Form in eine Atmosphäre, die eine relative Feuchtigkeit von etwa 50 % bis etwa 75 % aufweist, umfaßt, und Stufe (c) das Kondensieren von Wasser aus dieser Atmosphäre auf diesen Film vor der vollständigen Verdampfung des Lösungsmittels hieraus umfaßt.

4. Verfahren nach Anspruch 3, in welchem die Stufen (b) und (c) bei einer Temperatur von etwa 15° C bis etwa 25° C durchgeführt werden.

5. Verfahren nach Anspruch 2, in welchem diese Form hohl ist, eine Wandstärke von weniger als 0,635 cm (0,25 Zoll) hat und eine Wärmeleitfähigkeit von wenigstens etwa 83,71 x 10⁻⁴ J/(sec.cm.°C) (20 x 10⁻⁴ cal/(sec.cm.°C)) aufweist.

6. Verfahren nach Anspruch 2, in welchem diese Form aus Glas hergestellt ist, hohl ist und eine Wandstärke von weniger als etwa 0,381 cm (0,15 Zoll) hat.

7. Verfahren nach Anspruch 2, in welchem diese Form aus Kunststoff hergestellt ist, hohl ist und eine Wandstärke von weniger als etwa 0,102 cm (0,040 Zoll) hat.

8. Verfahren nach Anspruch 2, in welchem Stufe (c) das Sprühen von Wassertröpfchen über diese Oberfläche umfaßt.

9. Verfahren nach Anspruch 2, in welchem dieses Lösungsmittel eine Verbindung ist, die aus der aus Tetrahydrofuran, Methylethylketon, Methylenchlorid, Aceton und Mischungen hiervon bestehenden Gruppe ausgewählt ist.

## Revendications

1. Procédé pour la fabrication d'une enveloppe en polymère de contour préchoisi ayant une surface onctueuse, suivant lequel :
a) on immerge une forme dudit contour choisi dans une solution d'une matière formant un polymère à état solide dissoute dans un premier liquide ;
b) on retire ladite forme de ladite solution pour en retenir un film liquide sur ladite forme ;
c) on met en contact ledit film avec un second liquide qui est miscible audit premier liquide et dans lequel ladite matière formant un polymère à état solide est sensiblement insoluble ;
d) on convertit ladite matière formant un polymère à état solide en un film de polymère à état solide sur ladite forme avec une surface mate ; et
e) on retire ledit film de polymère à état solide de ladite forme,
caractérisé en ce que ladite matière formant un polymère à état solide est un Polymère complètement durci.

2. Procédé suivant la revendication 1, suivant lequel
à l'étape a) on immerge un polyuréthanne complètement durci dans un solvant miscible à l'eau ayant un point d'ébullition inférieur à environ 80°C ;
à l'étape b) on provoque une évaporation dudit solvant miscible à l'eau dudit film liquide ;
à l'étape c) on met en contact ledit film liquide avec de l'eau avant évaporation complète dudit solvant miscible à l'eau de ce film ; et
à l'étape d) on évapore sensiblement tout solvant restant dudit film liquide.

3. Procédé suivant la revendication 2, où l'étape b) comporte de retirer ladite forme sous une atmosphère ayant une humidité relative d'environ 50 % à environ 75 %, et l'étape c) comporte de condenser l'eau de ladite atmosphère sur ledit film avant complète évaporation du solvant de ce film.

4. Procédé suivant la revendication 3, où les étapes b) et c) sont exécutées à une température d'environ 15°C à 25°C.

5. Procédé suivant la revendication 2, où ladite forme est creuse, possède une épaisseur de paroi de moins de 0,635 cm (0,25 inch) et une conductivité thermique d'au moins environ 83,71 x 10⁻⁴ J/(sec.cm. °C) (20 x 10⁻⁴ cal/(sec. cm. °C).

6. Procédé suivant la revendication 2, où ladite forme est faite en verre, est creuse , et présente une épaisseur de paroi d'au moins environ 0,381 cm (0,15 inch).

7. Procédé suivant la revendication 2, où ladite forme est faite de plastique, est creuse et présente une épaisseur de paroi de moins de 0,102 cm (0,040 inch).

8. Procédé suivant la revendication 2, où l'étape c) comporte de pulvériser des gouttes d'eau sur ladite surface.

9. Procédé suivant la revendication 2, où ledit solvant est un composant choisi dans le groupe constitué de tétrahydrofuranne, méthyl-éthyl-cétone, chlorure de méthylène, acétone, et leurs mélanges.
